# EUROPÄISCHE PATENTSCHRIFT

(11) **EP 1 187 733 B1**
(45) Veröffentlichungstag und Bekanntmachung des Hinweises auf die Patenterteilung: **19.01.2005**
(21) Anmeldenummer: 00912593.1
(22) Anmeldetag: 10.03.2000
(51) Int. Cl.: B60H 1/00

(54) **VORRICHTUNG ZUR REGELUNG DER INNENRAUMTEMPERATUR EINES KRAFTFAHRZEUGES**
DEVICE FOR CONTROLLING THE INTERIOR TEMPERATURE OF A MOTOR VEHICLE
DISPOSITIF DE REGULATION DE LA TEMPERATURE A L'INTERIEUR D'UN VEHICULE

(30) Priorität: 14.04.1999 DE 19916691
(43) Veröffentlichungstag der Anmeldung: 20.03.2002
(73) Patentinhaber: SIEMENS AKTIENGESELLSCHAFT, 80333 München (DE)
(72) Erfinder: STROBEL, Henry, D-65843 Sulzbach (DE)
(86) Internationale Anmeldenummer: PCT/EP2000/002140
(87) Internationale Veröffentlichungsnummer: WO 2000/063034

(56) Entgegenhaltungen:
- DE-A- 4 336 934
- DE-C- 19 708 383
- US-A- 5 564 493
- US-A- 5 775 415
- US-A- 5 810 078

## Beschreibung

Die Erfindung betrifft eine Vorrichtung zur Regelung der Innenraumtemperatur eines Kraftfahrzeuges, bei welchem die Innenraumtemperatur mittels eines Innenraumtemperatursensors gemessen und in einer Innenraumtemperaturregeleinrichtung mit einem Innenraumtemperatursollwert verglichen wird und das Ausgangssignal der Innenraumtemperaturregeleinrichtung einmal einer Ausblastemperaturregeleinrichtung zugeführt wird, welche eine Kühl-/Heizvorrichtung für die dem Innenraum zuzuführende Ausblasluft steuert, wobei die Ausblastemperatur der Ausblasluft von mindestens zwei Ausbfastemperatursensoren gemessen wird, welche an unterschiedlichen Stellen des Innenraumes endenden Ausblaskanälen angeordnet sind, wobei das Ausgangssignal der Innenraumtemperaturregelung mit dem von einem Ausblastemperatursensor gemessenen Wert in der Ausblastemperaturregeleinrichtung verglichen wird und das Ausgangssignal gleichzeitig jeweils einem in den Ausblaskanälen angeordneten Luftverteilungsstellglied zur Einstellung der Innenraumtemperatur zugeführt wird und die Meßsignete der Ausblastemperatursensoren einer Ausblastemperatursteuereinrichtung zugeführt werden, welche die Meßwerte unabhängig voneinander wichtet. Eine derartige Vorrichtung ist aus der DE 197 08 383 C1 bekannt, bei der anschließend die gewichtet überlagerten Meßwerte weiterverarbeitet werden.

Fahrzeug-Klimaanlagen weisen eine Klimatisierungsvonichtung auf, durch die dem zu klimatisierenden Innenraum des Fahrzeuges zuzuführende Ausblasluft erzeugt wird. Eine solche Klimatisierungsvorrichtung besitzt ein Kühl- und ein Heizaggregat, ein Gebläse und in den Innenraum führende Ausblaskanäle. Über Stellglieder lassen sich die einzelnen Komponenten der Klimatisierungsvorrichtung steuern bzw. die Verteilung der Ausblasluft auf die verschiedenen Ausblaskanäle richten.

Ist nur ein Ausblasfühler in einem Luftauslaßkanal angeordnet, ist für den Fall, daß aus dem Auslaßkanal keine Luft herauskommt, die Messung nicht verwertbar.

Aus der DE 43 36 934 C2 ist ein Verfahren zur Regelung der Innenraumtemperatur bekannt, welchem eine Ausblastemperaturregelung unterlagert ist, um die Ausblastemperatur innerhalb eines vorgebbaren Temperaturbereiches zu regeln, wobei zwei Ausblastemperaturfühler verwendet werden. Um den Komfort der Passagiere weiter zu verbessern, werden die Ausgangssignale sowohl der Innenraumtemperaturregelung als auch der Ausblassensoren in komplizierte Kombinationen von mehreren Regel- und Steuerkreisen miteinander verknüpft.

Der Erfindung liegt die Aufgabe zugrunde, eine Vorrichtung zur zuverlässigen Innenraumtemperaturregelung mit unteriagerfer Ausblastemperaturregelung vorzuschlagen, welche einfach und zuverlässig arbeitet und trotzdem einen hohen Komfort der Passagiere im Fahrzeuginnenraum gewährleistet.

Erfindungsgemäß wird die Aufgabe durch eine Vorrichtung nach Anspruch 1 gelöst.

Der Vorteil der Erfindung besteht darin, daß trotz einer solchen einfachen Auswertung eine zuverlässige Klimatisierung erreicht wird. Da die Temperatursensoren nur einwandfrei messen können, wenn sie von Luft umströmt sind, wird also der Meßwert des Sensors, welcher am meisten von Luft umströmt ist, mit der höchsten Wertigkeit bewertet.

Vorteilhafterweise wird das Luftverteilungsstellglied mit der Ausblastemperatursteuereinrichtung verbunden, wobei die Wichtung der einzelnen Meßwerte der Ausblastemperatursensoren in Abhängigkeit von der Stellung des Luftausblasstellgliedes erfolgt, welches den Ausblasluftstrom in dem Auslaßkanal steuert, in welchem ein zugeordneter Sensor angeordnet ist. Anhand der Luftverteilung auf den einzelnen Ausblaskanälen ist bekannt, welcher Anteil der Ausblasluft über den dem Ausblastemperatursensor zugeordneten Ausblaskanal abgeströmt wird. Somit ist eine zuverlässige Wichtung möglich.

Die Erfindung läßt zahlreiche Ausführungsmöglichkeiten zu. Eine davon soll anhand der in der Zeichnung dargestellten Figuren näher erläutert werden. Es zeigt:
- Figur 1:: Klimagerät eines Kraftfahrzeuges,
- Figur 2:: Innenraumtemperaturregelung des Kraftfahrzeuges.

Gleiche Merkmale sind mit gleichen Bezugszeichen gekennzeichnet.

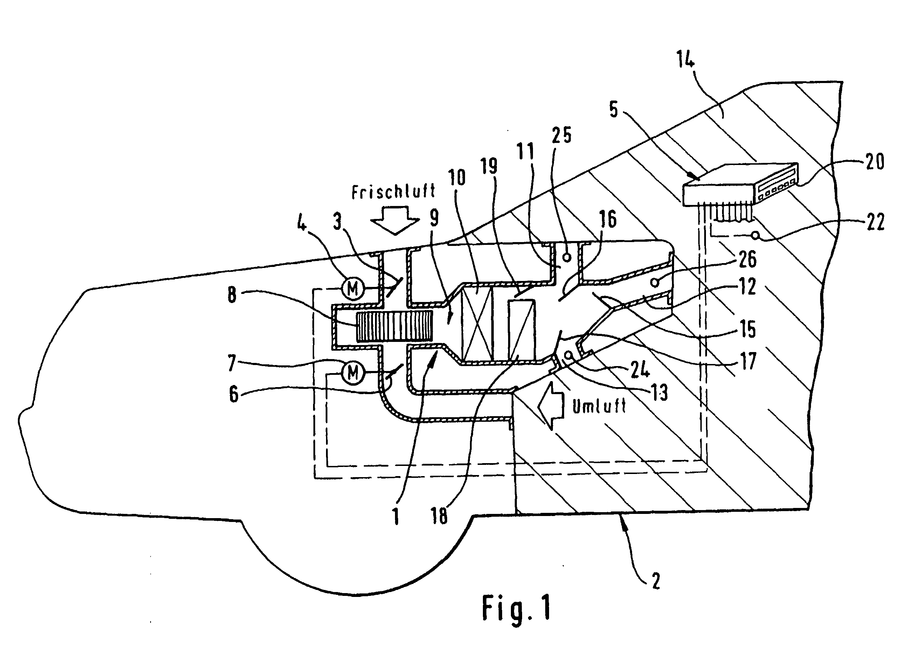

Gemäß Figur 1 ist das Klimagerät 1 in seiner konkreten Anordnung im Kraftfahrzeug 2 dargestellt.

Über die Frischluftklappe 3, deren Stellung von einem Stellmotor 4 in Abhängigkeit von elektrischen Signalen gesteuert wird, die vom Klimasteuergerät 5 ausgegeben werden, wird Frischluft aus der Umgebung des Fahrzeuges in das Kraftfahrzeug 2 angesaugt.

Die Umluft aus dem Fahrgastraum des Kraftfahrzeuges wird über die Umluftklappe 6 vom Klimagerät 1 angesaugt. Auch die Stellung der Umluftklappe 6 wird in Abhängigkeit von elektrischen Signalen des Klimasteuergerätes 5 von einem Stellmotor 7 gesteuert. Über den Ventilator 8 werden Um- und Frischluft in das Klimagerät 1 gefördert, wodurch hinter dem Ventilator 8 Mischluft 9 entsteht.

Diese Mischluft 9 wird dem Verdampfer 10 zugeführt.

Im Kühlbetrieb wird die Mischluft 9 über Ausströmkanäle 11, 12, 13 an den Fahrgastraum 14 abgegeben. Diese Ausströmkanäle 11, 12, 13 weisen in Richtung Windschutzscheibe, in Richtung Fahrer bzw. Beifahrer und in Richtung des Fußbereiches des Fahrers bzw. Beifahrers. Mittels der in den einzelnen Kanälen 11, 12, 13 angeordneten Luftverteilerklappen 15, 16, 17 kann der Lufteintritt automatisch mit Hilfe nicht weiter dargestellter Stellmotoren bzw. per Hand vom Fahrer bzw. Beifahrer reguliert werden.

An den Verdampfer 10 schließt sich ein Wärmetauscher 18 an. Die vom Verdampfer 10 abgegebene Luftmenge wird mit Hilfe einer Temperaturklappe 19 am Wärmetauscher 18 vorbeigeführt und dabei erwärmt. Im Heizbetrieb strömt dann die entsprechend temperierte Mischluft 9 in den Fahrgastraum 14.

Das Klimasteuergerät 5 ist üblicherweise im oder in der Nähe des Armaturenbrettes des Fahrzeuges 1 angeordnet, so daß es mühelos vom Fahrer und Beifahrer während der Fahrt bedient werden kann.

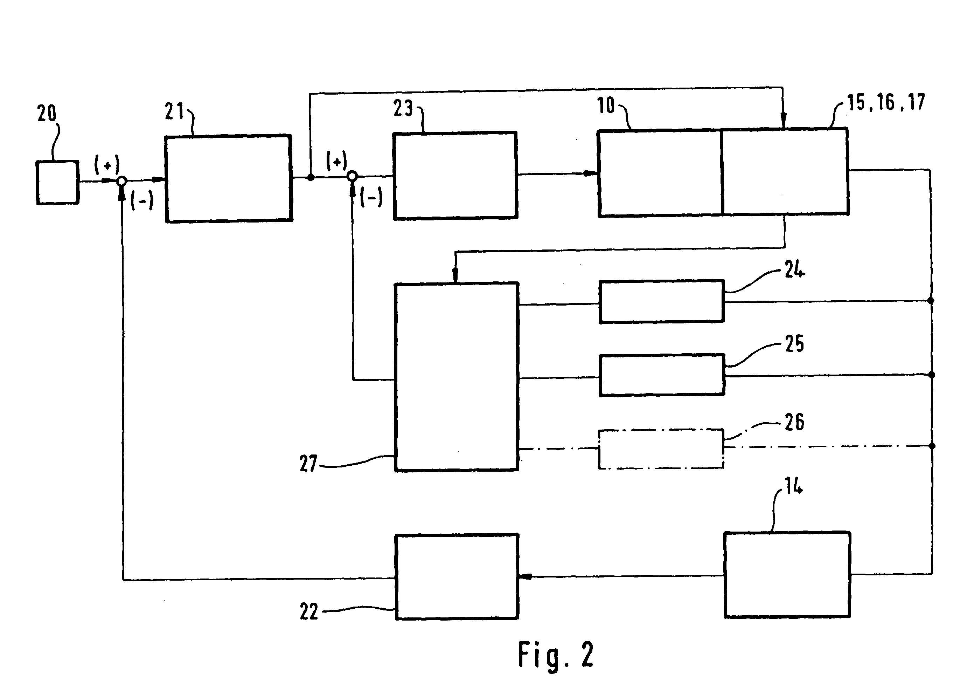

Der im Klimasteuergerät 5 angeordnete Mikroprozessor übernimmt die Regelung der Innenraumtemperatur in der Fahrgastzelle 14, wie sie in Figur 2 dargestellt ist.

Durch am Klimasteuergerät 5 angeordneten Bedienelemente 20 gibt der Fahrer bzw. der Beifahrer seinen Innenraumtemperaturwunsch als Sollwert für die Innenraumtemperaturregelung 21 ein. Diese vergleicht die tatsächliche Innenraumtemperatur, welche mittels des Innenraumtemperatursensors 22 gemessen wird. In Abhängigkeit von diesem Vergleich werden die Klappen 15, 16, 17 ansteuert und so die Innenraumtemperatur im Fahrgastraum 14 geregelt.

In einer unterlagerten Regelung wird zur Erwärmung der Luft auf die gewünschte Temperatur das Ausgangssignal des Innenraumtemperaturreglers 21 auf eine Ausblastemperaturregelung 23 gegeben. Diese steuert in Abhängigkeit von den Ausblastemperaturen, welche je ein in den einzelnen Ausblaskanälen 11, 12, 13 angeordneter Ausblastemperatursensor 24, 25, 26 mißt, den Wärmetauscher 18 und die Temperaturklappe 19 zum Heizen bzw. die Frischluftklappe 3 und den Ventilator 8 zum Kühlen an.

In einer Ausblastemperatursteuereinrichtung 27 werden die getrennt von den Ausblastemperatursensoren 24, 25, 26 bereitgestellten Meßergebnisse gewichtet.

Die Wichtung der Meßergebnisse erfolgt in Abhängigkeit von der Stellung der in den einzelnen Ausströmkanälen 11, 12, 13 angeordneten Klappen 15, 16, 17. Dabei korreliert der in einem Ausströmkanal angeordnete Ausblassensor mit der ebenfalls im selben Kanal angeordneten Klappe.

Die Wichtung erfolgt dabei für jede Luftverteilerklappe 15, 16, 17 folgendermaßen: Ist die Luftverteilerklappe 15, 16, 17 geschlossen, d.h. der zugeordnete Ausblastemperatursensor 24, 25, 26 wird nicht von Luft umströmt, werden dessen Meßwerte in der Ausblastemperaturregelung 23 nicht berücksichtigt.

Wird festgestellt, daß die Luftverteilerklappe 15, 16, 17 voll geöffnet ist, wird davon ausgegangen, daß der sich im entsprechenden Luftausströmkanal 11, 12, 13 befindliche Ausblastemperatursensor 24, 25, 26 vollständig von Luft umströmt ist und der vom Ausblastemperatursensor 24, 25, 26 gelieferte Meßwert wird mit 100% berücksichtigt.

Ist die Luftverteilerklappe 15, 16, 17 beispielsweise nur zu 40% geöffnet, wird der Wert des zugehörigen Ausblastemperatursensors 24, 25, 26 in diesem Luftverteilerklappe 15, 16, 17 auch nur zu 40% gewichtet.

Nach der Wichtung wird der Meßwert des Ausblastemperatursensors 24, 25, 26 weiterverarbeitet, welcher am meisten von Luft umströmt ist.

Durch die Verwendung von drei Ausblastemperatursensoren 24, 25, 26 ist immer sichergestellt, daß ein für die Temperatur der Ausblasluft repräsentativer Wert zur Einstellung der Ausblastemperaturregelung 23 genutzt wird.

## Patentansprüche

1. Vorrichtung zur Regelung der Innenraumtemperatur eines Kraftfahrzeuges, bei welchem die innenraumtemperatur mittels eines Innenraumtemperatursensors (22) gemessen und in einer Innenraumtemperatumegeleinrichtung (21) mit einem Innenraumtemperatursollwert verglichen wird und das Ausgangssignal der Innenraumtemperaturregeleinrichtung (21) einer Ausblastemperaturregeleinrichtung (23) zugeführt wird, welche eine Kühl-/Heizvorrichtung für die dem Innenraum zuzuführende Ausblasluft steuert, wobei die Ausblastemperatur der Ausblasluft von mindestens zwei Ausblastemperatursensoren (24, 25, 26) gemessen wird, welche an unterschiedlichen Stellen des Innenraumes endenden Ausblaskanälen (11, 12, 13) angeordnet sind und das Ausgangssignal der Innenraumtemperaturregelung mit dem von einem Ausblastemperatursensor (24, 25, 26) gemessenen Wert in der Ausblastemperaturregeleinrichtung (23) verglichen wird und das Ausgangssignal der Innenraumtemperaturregeleinrichtung (21) gleichzeitig jeweils einem in den Ausblaskanälen (11, 12, 13) angeordneten Luftverteilungsstellglied (19) zur Einstellung der Innenraumtemperatur zugeführt wird und die Meßsignale der Ausblastemperatursensoren (24, 25, 26) einer Ausblastemperatursteuereinrichtung (27) zugeführt werden, welche die Meßwerte unabhängig voneinander wichtet, **dadurch gekennzeichnet, daß** nur der Meßwert desjenigen Ausblastemperatursensors (24, 25, 26) mit dem Ausgangssignal der Innenraumtemperaturregelung (21) verglichen wird, der am meisten in Luft umströmt ist.

2. Vorrichtung nach Anspruch 1, **dadurch gekennzeichnet, daß** das Luftverteitungsstellelement (14, 15, 16) mit der Ausblastemperatursteuerungseinrichtung (27) verbunden ist, wobei die Wichtung der einzelnen Meßwerte der Ausblastemperatursensoren (24, 25, 26) in Abhängigkeit von der Stellung des Luftausblasstellelementes (14, 15, 16) erfolgt, welchem der Ausblastemperatursensor (24, 25, 26) zugeordnet ist.

3. Vorrichtung nach Anspruch 1 oder 2, **dadurch gekennzeichnet, daß** jeder Ausblastemperatursensor (24, 25, 26) in einem Luftausströmkanal (11, 12, 13) oder in der Nähe der Auslaßöffnung angeordnet ist.

## Claims

1. Device for controlling the interior temperature of a motor vehicle, in which the interior temperature is measured by means of an interior temperature sensor (22) and is compared in an interior-temperature-controlling device (21) with an interior-temperature desired value, and the output signal of the interior-temperature-controlling device (21) is supplied to a blow-out-temperature-controlling device (23) which controls a cooling/heating device for the blow-out air to be supplied to the interior, the blow-out temperature of the blow-out air being measured by at least two blow-out temperature sensors (24, 25, 26), which are arranged on blow-out ducts (11, 12, 13) ending at different locations in the interior, and the output signal of the interior-temperature controlling means is compared in the blow-out temperature-controlling device (23) with the value measured by a blow-out temperature sensor (24, 25, 26) and the output signal of the interior-temperature-controlling device (21) is supplied simultaneously in each case to an air-distribution setting element (19), which is arranged in the blow-out ducts (11, 12, 13), for setting the interior temperature, and the measuring signals of the blow-out temperature sensors (24, 25, 26) are supplied to a blow-out temperature controller (27) which weights the measured values independently of one another, **characterized in that** only the measured value of that blow-out temperature sensor (24, 25, 26) which has most air flowing around it is compared with the output signal of the interior-temperature-controlling means (21).

2. Device according to Claim 1, **characterized in that** the air-distribution setting element (14, 15, 16) is connected to the blow-out temperature controller (27), the weighting of the individual measured values of the blow-out temperature sensors (24, 25, 26) taking place as a function of the position of the air blow-out setting element (14, 15, 16) to which the blow-out temperature sensor (24, 25, 26) is assigned.

3. Device according to Claim 1 or 2, **characterized in that** each blow-out temperature sensor (24, 25, 26) is arranged in an air discharge duct (11, 12, 13) or in the vicinity of the outlet opening.

## Revendications

1. Dispositif permettant de réguler la température de la cabine d'un véhicule automobile et dans lequel la température de la cabine est mesurée au moyen d'un capteur de la température de la cabine (22) et comparée, dans un dispositif de régulation de la température de la cabine (21), à une valeur de consigne de la température de la cabine et dans lequel le signal de sortie du dispositif de régulation de la température de la cabine (21) est appliqué à un dispositif de régulation de la température de l'air expulsé (23), lequel contrôle un système de refroidissement et de chauffage de l'air expulsé à envoyer dans la cabine, la température de l'air expulsé étant mesurée par au moins deux capteurs de la température de l'air expulsé (24, 25, 26), qui sont disposés sur des conduites d'expulsion (11, 12, 13) se terminant à des endroits différents de la cabine, le signal de sortie de la régulation de la température de la cabine étant comparé, dans le dispositif de régulation de la température de l'air expulsé (23), à la valeur mesurée p ar u n capteur d e la température de l'air e xpulsé (24, 25, 26) et le signal de sortie du dispositif de régulation de la température de la cabine (21) étant, en même temps, appliqué à un élément de réglage de la répartition d'air (19), m onté d ans chacune d es conduites d'expulsion ( 11, 12, 13) et destiné au réglage de la température de la cabine, et les signaux de mesure des capteurs de la température de l'air expulsé (24, 25, 26) étant appliqués à un dispositif de contrôle de la température de l'air expulsé (27), qui pondère les valeurs de mesure indépendamment l'une de l'autre **caractérisé par le fait que** seule la valeur de mesure du capteur de température (24, 25, 26), qui est le plus fortement ventilé par l'air, est comparée au signal de sortie du dispositif de régulation de la température de la cabine (21).

2. Dispositif selon la revendication 1 **caractérisé par le fait que** l'élément de réglage de la répartition de l'air (14, 15, 16) est relié au dispositif de contrôle de la température de l'air expulsé (27), la pondération des différentes valeurs de mesure des capteurs de la température de l'air expulsé (24, 25, 26) se faisant en fonction de la position de l'élément de réglage de la répartition de l'air expulsé (14, 15, 16) qui correspond au capteur de la température de l'air expulsé (24, 25, 26).

3. Dispositif selon la revendication 1 ou 2 **caractérisé par le fait que** chaque capteur de la température de l'air expulsé (24, 25, 26) est disposé dans une conduite d'expulsion (11, 12, 13) ou à proximité de l'ouverture de sortie.
